# EUROPEAN PATENT APPLICATION

(11) **EP 2 813 991 A1**
(43) Date of publication of application: **17.12.2014**
(21) Application number: 14002038.9
(22) Date of filing: 13.06.2014
(51) Int. Cl.: G06Q 30/02

(54) **Method for automatic calculation of the vehicle's possible insurance cost and its presentation on the display of the user device**

(30) Priority: 15.06.2013 EE 201300063
(71) Applicant: Silver Havamaa, 10149 Tallinn (EE)
(72) Inventor: Silver Havamaa, 10149 Tallinn (EE)
(74) Representative: Koitel, Raivo

(57) **Abstract**

In the present invention the method for automatic calculation of the vehicle's possible insurance cost and its presentation on the display of the user device is provided, which allows the calculation of the possible insurance cost for one and more vehicles without the user's repetitive insertion of the vehicle data (e.g. brand, model, engine's power, first registration date and cost). The method is devised to function in an electronic system, which is bound to one and more insurance companies' electronic database for placing inquiries and receiving responses. The electronic system may be accommodated with web based system for user access. According to method the electronic system is accommodated with personal cards, which are completed with real or deduced data, and will allow the user to insert other data into the electronic system, which in turn may be used to process possible insurance cost values presented to the user and selectively used for automatic calculation of the possible insurance cost. Inquiry responses for one or more vehicles are presented on the display of the user device simultaneously and selectively with the cost of one or more vehicles. During the presentation of the data to the user, the differentiation of the visual image is applied. Possible insurance cost is calculated independently of the presentation of the data to the user and preferably prior presentation to the user.

## Description

### Technical field

The present invention represents a method to be used for automatic calculation of the possible insurance costs of a vehicle and presentation of the results on the display of the user device, employing, for example, a web-based user interface.

### Prior art

Electronic databases (for example, www.salva.ee, www.if.ee) are known from prior art, providing the means for calculating insurance service costs per insurance company, using the technical parameters (for example, registration number or engine power and area of use) of a specific vehicle. Being bound to the calculation of value of services offered by a one insurance company can be highlighted as the main disadvantage of these solutions; also, making repetitive inquiries will be more time consuming for user as every inquiry needs to be entered into the electronic system afresh and when several inquiries are made, there is no option available to present the results simultaneously to user.

Electronic databases (for example www.iizi.net) are known from prior art, providing the means for calculating insured value of a vehicle, using the parameters (for example, brand, model, registration number or engine power) of a vehicle, employing rates available from more than one insurance company. The fact that similar inquiry has to be made repeatedly to calculate the personalised insurance costs for several vehicles, each time inserting the parameters of a vehicle, as minimum, can be specified as a disadvantage of the solution.

### Summary of the invention

The purpose of this invention is to provide a method for automatic calculation of the possible insurance cost of a vehicle and presentation of the results within an electronic system, employing the user device, which would allow the calculation and presentation of possible insurance costs for one or more vehicles without repeated insertion of personal data and parameters (e.g. brand, model, engine's power, first registration date and cost) of a vehicle; furthermore, which would allow to the calculation of possible insurance costs with no need to insert personal information of user, also presenting possible insurance costs for one or more vehicles on the display of user device.

The method will be implemented within an electronic system, which is linked to an electronic database of one or more insurance companies to allow making inquiries and receiving responses within an electronic system. The electronic system can be supplied with a web-based interface to allow user access and to present the results to users on the display of user device.

According to the method, the system allows searches from a one or more electronic vehicle sale database, involving the electronic system presenting the calculated possible insurance costs of a vehicle to user device, including either the price of the vehicle or, by choice, as a component of the total vehicle cost. In addition, settings can be predefined to present insurance costs and vehicle costs on the display of the user device simultaneously for more than one vehicle.

Operations predefined in the electronic system will be used to calculate the possible insurance costs of the vehicle, for example, the arithmetic mean calculated on the bases of values, retrieved as responses to inquiries, or by multiplying the values, retrieved as responses to inquiries, by a predefined coefficient to obtain the possible cost, or by applying the weighting coefficient to obtain the possible cost etc.

The method will provide for the calculation of possible insurance costs, independent of the inquiries made by the user to one or more available electronic vehicle sale databases, thus presenting the cost of the vehicle with the possible insurance cost, calculated earlier, to the user by means of the display of user device.

The method comprises the following steps:
- one or more personal cards will be created in the electronic system to allow recording of different personal data;
- at least one personal card will be completed with the required information;
- the system will make an inquiry, employing the user device, to retrieve data from electronic databases of other companies, using the parameters of vehicle and personal card information as predefined in the electronic system;
- user device will receive responses to inquiries, retrieved from electronic databases of other companies;
- one and more inquiries will be made to electronic databases of other companies, using information of one or more personal cards;
- responses to inquiries will be used for automatic calculation of the possible insurance costs to match the predefined settings in the electronic system;
- the possible insurance costs will be presented to the display of the user's user device, involving simultaneous presentation of responses for a one or more vehicles, selectively, with or without the cost of one or more vehicles;
- the system will store the initial, final and intermediate data, generated during the operations, which will be then selectively used for other operations.

Making the inquiries and analysis of responses, involving the modification and calculation of possible insurance costs can be carried out independent of the user.

### Preferred embodiments of the invention

One of the preferred embodiments of the invention includes implementation of the method as a part of a web-based electronic system, involving automatic calculation of the possible insurance costs per vehicle and the presentation of the results to the user on the user device.

Preferred embodiment of the method includes implementation of the method as a part of a web-based electronic system, which will be linked to electronic databases of one or more insurance companies, used to make inquiries and receive responses. The electronic system will be supplied with at least one or more personal cards.

In addition, the electronic system will be linked to several electronic vehicle sale databases.

The method comprises the following steps:
- one or more personal cards, which will allow storing different personal information, will be created within the electronic system;
- personal card will be completed with data, preferably by the administrator of the electronic system, using, for example, records of people retrieved against a sample of an appropriate size;
- the system will make an inquiry, employing the user device, to retrieve data from electronic databases of other companies, using the parameters of vehicle and personal card information as predefined in the electronic system;
- user device will be used to receive responses to inquiries from electronic databases of other companies;
- one or more inquiries will be made to electronic databases of other companies;
- responses to inquiries will be used for automatic calculation of the possible insurance costs to match the predefined settings of the electronic system, for example, to calculate the arithmetic mean of the total, obtained as responses to inquiries, which will be then multiplied by an appropriate constant;
- the possible insurance costs, calculated automatically, will be presented to the display of the user's user device, involving simultaneous presentation of responses for a one or more vehicles, selectively, with or without the cost of one or more vehicles;
- the inquiries can be made and responses analysed, involving the modification and calculation of possible insurance costs, can be carried out independent of the user;
- the system will store the initial, final and intermediate data, generated during the operations, which will be then selectively used for other operations, for example, to generate other data inquiries and to present the information obtained to users.

The consecutive preferred embodiment will involve adjustment of the previous preferred embodiment to allow the electronic system to make the same inquiry, repeatedly, to electronic system of one or more insurance companies to allow the costs, obtained as responses to inquiries, to be used for the calculation of possible insurance costs without repeated insertion of parameters of the same vehicle into the inquiry, at different moments of time. This will also contribute to selective use of responses thus collected to devise trend charts and use them for the calculation of possible insurance costs, thus decreasing the number of inquiries.

Yet another consecutive preferred embodiment will involve adjustment of the previous preferred embodiments to allow for the electronic system to make inquiries for at least one vehicle, using different personal card records, and selective processing of inquiry results before these are displayed to user, for example, using personal cards that describe individuals of different age to determine the possible insurance costs, considering different age groups.

Yet another consecutive preferred embodiment will involve adjustment of the previous preferred embodiments to allow the user to insert additional parameters into the electronic system before the possible insurance costs are presented to the user device, by determining, for example, that possible insurance costs of vehicles, applicable to males aged from 30 to 40 years, represent the search object. The electronic system will then allow to filter and process responses to earlier inquiries, based on these criteria, and to use inserted additional parameters for the calculation of possible insurance costs.

As the information is displayed to user, the records to be highlighted will be highlighted from the text, using, for example, different colours.

## Claims

1. Method for automatic calculation of the vehicle's possible insurance cost and its presentation on the display of the user device, which will be applicable within an electronic system, whereas involving selective linking of the electronic system to other electronic systems and databases to be used for making inquiries and receiving responses; users can insert additional parameters into the electronic system; the electronic system will be established with one and more personal cards; databases of vehicles, sold by other individuals, will be selectively used to make inquiries and the possible insurance costs of the vehicle will be presented to user by means of an electronic system; the method is **characterised in that** one or more personal cards will be completed with data that can be random; electronic system will use parameters of the vehicle, available from the electronic system, and personal card data to make a data inquiry to other electronic databases, including electronic databases of other companies, whereas inquiries to electronic databases of other companies will be made at least once, whereas data from one or more personal card will be used; responses received to inquiries from other electronic will be used to calculate, automatically, the possible insurance costs of the vehicle, which will be then presented to the user on the display of the user device simultaneously for more than one vehicle or, selectively with the costs or one or more vehicle, including selective processing of data obtained from responses to inquiries and automatically calculated possible insurance costs; one automated inquiry, as minimum, will be made to the databases of other enterprises, whereas single insertion of data by user will be required to specify the inquiry.

2. Method according to claim 1, **characterised in that** the personal card will be completed with real or deduced data, whereas real data may be used simultaneously or in part where deduced data will be used.

3. Method according to claim 1 and claim 2, **characterised in that** the data, recorded in the electronic system earlier, will be used to make inquiries.

4. Method according to claims 1 to 3,
**characterised in that** the personal card will be completed by the administrator of the electronic system.

5. Method according to claims 1 to 4, **characterised in that** the electronic system will communicate the same inquiry to an electronic system of at least one insurance company, repeatedly, whereas the inquiry will be only prepared once and save in the electronic system and the responses to inquiries will be recorded in the system, likewise.

6. Method according to claims 1 to 5, **characterised in that** the electronic system will make inquiries about at least one vehicle, using the data available from different personal cards, and the results of inquiries will be selectively processed before the calculation and presentation of the possible insurance costs, whereas personal cards that describe people of different age will be created.

7. Method according to claims 1 to 6, **characterised in that** before the calculation of the possible insurance cost and presenting it to user, additional parameters will be entered into the system by the user; the electronic system will then filter and process responses to earlier inquiries and use inserted additional parameters for the calculation of possible insurance costs.

8. Method according to claims 1 to 7, **characterised in that** differentiation of visual image will be applied to present the data on the display of the user device.
